Europäisches Patentamt

European Patent Office

Office européen des brevets

(19)

(11) Veröffentlichungsnummer: **0 254 712**
**B1**

(12) **EUROPÄISCHE PATENTSCHRIFT**

(45) Veröffentlichungstag der Patentschrifft:
28.02.90

(21) Anmeldenummer: 85906034.5

(22) Anmeldetag: 27.11.85

(86) Internationale Anmeldenummer:
PCT/DE 85/00494

(87) Internationale Veröffentlichungsnummer:
WO 86/05584 (25.09.86 Gazette 86/21)

(51) Int. Cl.⁵: **G 01 C 17/38**

(54) VERFAHREN ZUR ERMITTLUNG DER FAHRTRICHTUNG EINES FAHRZEUGES MIT ELEKTRONISCHEM KOMPASS.

(30) Priorität: 16.03.85 DE 3509548

(43) Veröffentlichungstag der Anmeldung:
03.02.88 Patentblatt 88/05

(45) Bekanntmachung des Hinweises auf die Patenterteilung:
28.02.90 Patentblatt 90/09

(84) Bennante Vertragsstaaten:
AT CH DE FR GB IT LI

(56) Entgegenhaltungen:
EP-A-0 041 892
WO-A-86/00128
DE-A-2 754 888
GB-A-2 130 729
US-A-4 445 279

(73) Patentinhaber: ROBERT BOSCH GMBH
Postfach 50
D-7000 Stuttgart 1 (DE)

(72) Erfinder: ALBERTER, Günter
Nordring 122
D-8500 Nürnberg (DE)
Erfinder: BAUER, Harald
Chamerstrasse 25
D-8500 Nürnberg (DE)
Erfinder: HELLDÖRFER, Reinhard
Rosenstrasse 9
D-8523 Igelsdorf (DE)
Erfinder: ITTNER, Peter
Alberichstrasse 8
D-8500 Nürnberg (DE)
Erfinder: RAUCH, Hans
Distelweg 11
D-8510 Fürth 9 (DE)

LIBERGRAF, STOCKHOLM 1990

## Beschreibung

### Stand der Technik

Die Erfindung geht aus von einem Verfahren zur Ermittlung der Fahrtrichtung eines Fahrzeuges mit einem elektronischen Kompass nach der Gattung des Hauptanspruchs. Bei einem bekannten Navigationsapparat (DE-PS-2 754 888) wird die Fahrtrichtung eines Fahrzeugs mit einem Zwei-Achsen-Magnetometer ermittelt, dessen Ausgangssignale zur Kompensation von magnetischen Störfeldern im Fahrzeug einer Korrektureinheit zugeführt werden. Bei dieser Lösung geht man davon aus, daß im Fahrzeug ein Störfeld vorhanden ist, das einem Erdfeld überlagert ist, welches durch die Karosserie des Kraftfahrzeuges je nach Ausrichtung des Fahrzeuges mehr oder weniger abgeschirmt wird. Dadurch ergibt sich für die Meßwerte des Magnetometers auf der X- und Y-Achse im Vektordiagramm durch Drehen des Fahrzeuges eine Ortskurve, deren Mittelpunkt mit dem Vektor des Störfeldes aus dem Achsenkreuz verschoben ist und die durch die proportionale Veränderung der Signale eine Ellipse bildet, deren Achsen parallel zu den Meßachsen im Vektordiagramm verlaufen. Durch die proportionale Veränderung des einen Ausgangssignales soll eine Ellipse zu einem Kreis umgeformt und durch die Nullpunktverschiebung soll der Kreis ins Achsenkreuz verlegt werden. Dies wird durch eine Kontrollstufe dadurch überprüft, daß die so korrigierten Signale jeweils zum Quadrat erhoben und addiert einen konstanten Wert bilden müssen (Kreisgleichung).

Nachteilig bei dieser bekannten Lösung ist, daß die Korrektur der vom Magnetometer gemessenen Werte in einer analogen Rechenschaltung durchgeführt wird, was nach der bisherigen Technologie zu ungenau ist. Die von der Kontrollstufe ermittelten Korrekturgrößen müssen durch Tastversuche ermittelt werden, was äußerst umständlich und fehlerhaft ist. Außerdem sind auf diese Weise nur zeitlich konstante Störfelder zu berücksichtigen. Ein weiterer wesentlicher Nachteil des bekannten Verfahrens besteht aber darin, daß für die elliptische Ortskurve des abgeschwächten Erdfeldes lediglich eine achsparallele Verschiebung aus dem Nullpunkt berücksichtigt wird, wogegen in Wirklichkeit eine solche elliptische Ortskurve auch noch im Vektordiagramm um einen Winkelbetrag gedreht ist. Da diese Drehung beim bekannten Meßverfahren nicht erfaßt wird, ergibt sich für die Navigation mit einem solchen elektronischen Kompass eine erhebliche Abweichung der ermittelten von der tatsächlichen Fahrtrichtung.

Mit der vorliegenden Erfindung wird angestrebt, durch eine möglichst genaue Ermittlung der tatsächlichen Ortskurve des am Magnetometer wirksamen Magnetfeldes die Richtung des Erdfeldes bzw. die Fahrtrichtung des Fahrzeuges möglichst genau zu ermitteln.

### Vorteile der Erfindung

Das erfindungsgemäße Verfahren zur Ermittlung der Fahrtrichtung mit den kennzeichnenden Merkmalen des Hauptanspruchs hat den Vorteil, daß mit den während der Drehung des Fahrzeuges erfaßten Meßwerten des am Magnetometer wirksamen Magnetfeldes durch die digitale Auswerteschaltung alle erforderlichen von dem Einbauort im Fahrzeug abhängigen Parameter zu ermitteln sind, welche die Mittelpunktsverschiebung als auch die Form und die Drehung der Ortskurve des Magnetfeldes im Vektordiagramm bestimmen. Auf diese Weise ist es möglich, aus den laufenden Messungen am Magnetometer über die ermittelte Ortskurve die genaue Richtung des Erdfeldes, die Nordrichtung bzw. die Fahrtrichtung oder die Richtung zu einem vorgegebenen Ziel zu ermitteln und anzuzeigen.

Zur Ermittlung der Nullpunktverschiebung der Ortskurve des vom Magnetometer gemessenen Magnetfeldes werden dabei die vier Meßpunkte mit den maximalen und minimalen Meßwerten während einer vollen Drehung z. B. Kreisfahrt des Fahrzeuges erfaßt und in der Auswerteschaltung abgespeichert.

Durch die in den abhängigen Ansprüchen aufgeführten Maßnahmen sind vorteilhafte Weiterbildungen und Verbesserungen der im unabhängigen Patentanspruch angegebenen Merkmale möglich. Besonders vorteilhaft ist es, unter Verwendung eines Mikrocomputers während der Fahrt die Änderungen der Fahrtrichtung durch Messung des Magnetfeldvektors von der Auswerteschaltung zu erfassen und beim Überschreiten eines vorgegebenen Wertes der Fahrtrichtungsänderung der aktuell gemessenen Werte als weiteren Meßpunkt der Ortskurve im Vektordiagramm abzuspeichern. Die so eingelesenen Meßpunkte werden zur Überprüfung und gegebenenfalls zur Korrektur der ermittelten Parameter der Ortskurve vom Rechner weiter verarbeitet. Außerdem können die Werte für die Fahrtrichtungsänderung zusammen mit Wegsignalen des Kraftfahrzeuges zur Ortsbestimmung des Fahrzeuges verwendet werden. Bei einer zweiten vollen Drehung des Fahrzeuges kann aus der laufenden Messung des Magnetfeldes am Magnetometer der größte und der kleinste Abstand der elliptischen Ortskurve von dessen Mittelpunkt von der Auswerteschaltung erfaßt und gespeichert werden. Die zweite Drehung des Fahrzeuges kann jedoch zweckmäßigerweise dadurch vermieden werden, daß während der ersten vollen Drehung bzw. einer ersten Kreisfahrt des Fahrzeuges neben den vier Meßpunkten mit den maximalen und minimalen Meßwerten noch eine Vielzahl weiterer Meßpunkte von der Auswerteschaltung zur Ermittlung der Parameter der Ortskurve des gemessenen Magnetfeldes erfaßt und gespeichert werden.

### Zeichnung

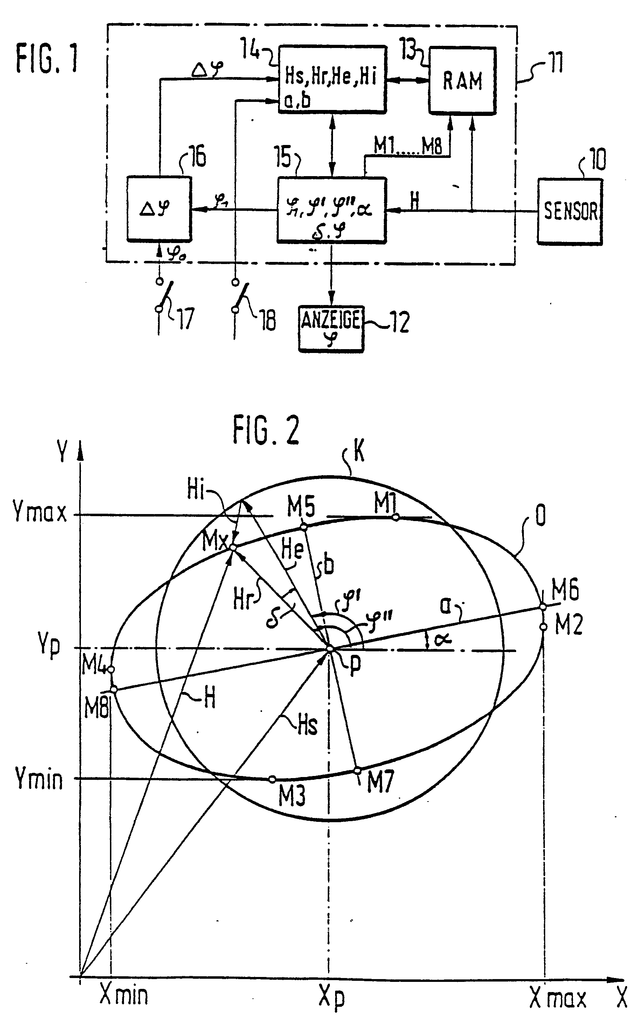

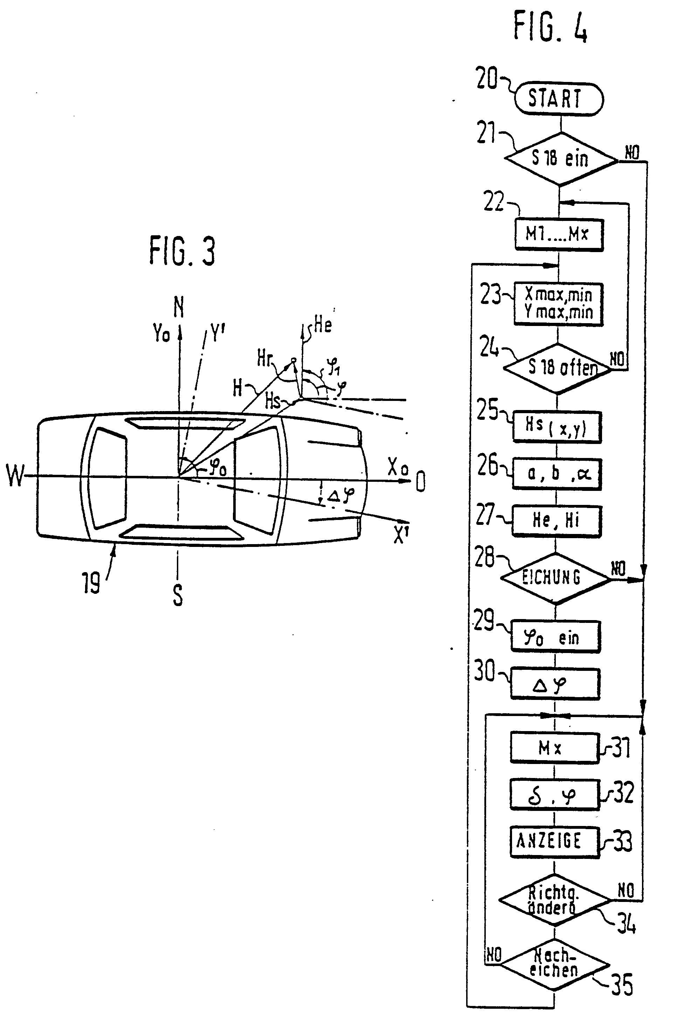

Ein Ausführungsbeispiel der Erfindung ist in der Zeichnung dargestellt und in der nachfolgenden Beschreibung näher erläutert. Es zeigen Figur 1 ein Blockschaltbild eines elektronischen Kompasses zur erfindungsgemäßen Ermittlung der Fahrtrichtung eines Fahrzeuges, Figur 2 ein Vektordiagramm mit der Ortskurve des vom Kompass gemessenen Magnetfeldes, Figur 3 zeigt ein Kraftfahrzeug mit den Vektorachsen in einer Eichstellung und Figur 4 zeigt ein Flußdiagramm für die Arbeitsweise des elektronischen Kompasses nach Figur 1.

**Beschreibung des Ausführungsbeispieles**

In Figur 1 ist das Blockschaltbild für einen elektronischen Kompass dargestellt, der zur Navigation in einem Kraftfahrzeug fest eingebaut ist. Der elektronische Kompass besteht aus einem Sensor 10, einer digitalen Auswerteschaltung 11 und einer Anzeige 12. Der Sensor 10, der beispielsweise mitten unter dem Dach eines Personenkraftfahrzeuges angebracht ist, enthält ein Magnetometer mit Zeitverschlüsselung. Das Magnetometer kann ein Drei-Achsen-Magnetometer oder ein Zwei-Achsen-Magnetometer sein, wobei die Achsen der Magnetfeldsonden um 90° gegeneinander verdreht sind. Das Magnetometer ist zusammen mit einer Stromversorgung und einer Signalformerstufe für jede der Magnetfeldsonden gemäß DE-OS-3 345 712 im Sensor 10 untergebracht. Die Auswerteschaltung 11 wird im wesentlichen durch einen Mikrocomputer realisiert, dessen Eingang die Sensorsignale zugeführt werden. Zur besseren Veranschaulichung des Verfahrens zur Ermittlung der Fahrtrichtung des Fahrzeugs ist die Auswerteschaltung 11 in eine Speicherstufe 13, eine Rechenstufe 14 für die Berechnung der Parameter einer Ortskurve des gemessenen Magnetfeldes, eine weitere Rechenstufe 15 zur Winkelbestimmung zwischen dem Erdfeld und der Fahrtrichtung sowie in eine Korrekturstufe 16 zur Winkelkorrektur aufgegliedert dargestellt. Über einen Tastschalter 17 kann dabei ein fester Richtungswinkel $\varphi_0$ an der Korrekturstufe 16 eingegeben werden. Über einen Ausgang ist die Rechenstufe 15 mit der Anzeige 12 verbunden, auf der neben weiteren Informationen die Fahrtrichtung angezeigt werden kann. Mit einem Tastschalter 18 wird die Auswerteschaltung 11 zur Ermittlung der Ortskurve vorbereitet.

Mit Hilfe der Figuren 2, 3 und 4 soll numehr die Durchführung des erfindungsgemäßen Verfahrens zur Ermittlung der Fahrtrichtung eines Fahrzeuges erläutert werden. Figur 2 zeigt das Vektordiagramm zur Messung des Magnetfeldes im Kraftfahrzeug 19 mit einem im Sensor 10 angeordneten Magnetometer. Von den beiden Sonden werden jeweils die X-Komponente bzw. die Y-Komponente des Magnetfeldvektors $\underline{H}$ gemessen, die sich aus der Größe und Richtung des vom Sensor 10 gemessenen Magnetfeldes ergibt.

In Figur 3 ist der Vektor $\underline{H}$ des Magnetfeldes im Bezug auf die Längsachse $x_0$ und die quer dazu in der Fahrzeugebene verlaufende Achse $y_0$ dargestellt. Dabei ist angenommen, daß hier der Sensor 10 mitten unter dem Dach des Personenwagens 19 angeordnet ist. Das dort gemessene Magnetfeld H setzt sich zusammen aus einem festen Störfeld Hs und der im Fahrzeug wirksamen Komponente Hr des Erdfeldes He. Obwohl der tatsächliche Vektor des gemessenen Magnetfeldes schräg im Raum liegt, genügt es zur Bestimmung der Fahrtrichtung, mit dem Sensor 10 nur den in der Fahrebene projizierten Vektor $\underline{H}$ des Magnetfeldes zu messen.

Zur Ermittlung der Fahrtrichtung ist es erforderlich, aus dem gemessenen Magnetfeldvektor $\underline{H}$ die Richtung des Erdfeldes He zu finden. Zu diesem Zweck sind verschiedene aufeinanderfolgende Verfahrensschritte erforderlich, die in Figur 4 in einem Flußdiagramm dargestellt sind, das von der Auswerteschaltung 11 zyklisch durchlaufen wird.

Mit dem Einschalten der Versorgungsspannung des elektronischen Kompasses wird das Programm gemäß Figur 4 im Schritt 20 gestartet. Im folgenden Programmschritt 21 wird geprüft, ob der Tastschalter 18 geschlossen ist. Um die Ortskurve O in Figur 2 für den Vektor $\underline{H}$ des gemessenen Magnetfeldes ermitteln zu können, muß nun zunächst der Tastschalter 18 geschlossen werden und das Fahrzeug 19 muß mit eingeschlagener Lenkung einen geschlossenen Kreis fahren. Dabei werden im Programmschritt 22 die X- und Y-Meßwerte des vom Sensor 10 gemessenen, sich ständig in Größe und Richtung ändernden Magnetfeldes H in einer Vielzahl von Meßpunkten M1.... Mx erfaßt und in der Speicherstufe 13 abgelegt. Die Erfassung der Meßpunkte kann dabei während der Kreisfahrt des Fahrzeuges 19 in bestimmten Zeitintervallen erfolgen oder nach Durchfahren bestimmter Wegabschnitte, die beispielsweise durch Signale eines nicht dargestellten Weggebers über den Tastschalter 18 in der Rechenstufe 14 der Auswerteschaltung 11 erfaßt werden. Gleichzeitig werden die vom Sensor 10 laufend gemessenen X- und Y-Werte des Magnetfeldes H an der Rechenstufe 15 überwacht und z. B. durch ein Differenzierglied werden die Meßpunkte M1 bis M4 mit den maximalen und minimalen X- und Y-Werten im Programmschritt 23 erfaßt und in der Speicherstufe 13 abgelegt. Nach der Kreisfahrt wird der Schalter 18 im Programmschritt 24 wieder geöffnet, da andernfalls weitere Meßwerte Mx eingelesen werden. Aus den in der Speicherstufe 13 befindlichen Meßpunkten ergibt sich gemäß Figur 2 eine elliptische Ortskurve O, die bezogen auf das Achsenkreuz des Vektordiagramms durch folgende Vektorgleichung zu beschreiben ist:

$$\underline{H} = \underline{H}s + \underline{H}r$$

dabei ist $\underline{H}s$ der Vektor des auf die Fahrebene projizierten konstanten Störfeldes, welches durch die Form und den Aufbau des Fahrzeuges vorgegeben ist und $\underline{H}r$ ist er Vektor eines resultierenden Magnetfeldes, welches sich aus dem Vektor des Erdfeldes $\underline{H}e$ und eines induzierten Störfeldes $\underline{H}i$ zusammensetzt. Der Vektor $\underline{H}i$ des induzierten Störfeldes ist abhängig von der Abschirmung des Erdfeldes durch die Fahrzeugkarosserie bzw. durch deren vom Erdfeld erzeugte Magnetisierung. Im Programmschritt 25 wird nun in der der Rechenstufe 14 aus den im Schritt 23 ermittelten maximalen und minimalen Meßwerten der Vektor des konstanten Störfeldes Hs nach folgender Gleichung ermittelt:

$$Hs_{(x, y)} = \frac{H_{(x, y)\ max} + H_{(x, y)\ min}}{2}$$

die nach dieser Gleichung in der Rechenstufe 14 nacheinander ermittelten X- und Y-Werte des konstanten Störfeldes Hs werden in der Speicherstufe 13 abgelegt. Die ermittelte Ortskurve O ist gemäß Figur 2 eine Ellipse, die um den konstanten Störfeldvektor $\underline{H}$s aus dem Achsenursprung des Vektordiagramms x, y verschoben und mit ihren Achsen um den Winkel $\alpha$ gedreht ist. Mit den gespeicherten Werten des Störfeldvektors $\underline{H}$s sind damit gleichzeitig die X- und Y-Werte für den Mittelpunkt P der elliptischen Ortskurve O erfaßt und als erste Parameter der Ortskurve O gespeichert.

Im nächsten Programmabschnitt 26 wird nun aus den gespeicherten Meßpunkten M1... Mx jeweils der resultierende Magnetfeldvektor $\underline{H}$r ermittelt nach der Vektorgleichung:

$$\underline{H}r = \underline{H} - \underline{H}s.$$

Dabei werden gleichzeitig als weitere Parameter der Ortskurve O von der Rechenstufe 14 die Meßpunkte M5 bis M8 mit dem größten und dem kleinsten Vektor $\underline{H}$r erkannt, erfaßt und abgespeichert. Sie entsprechen dem größten Radius a und dem kleinsten Radius b der elliptischen Ortskurve O. Aus den X- und Y-Werten des Mittelpunktes P und den X- und Y-Werten eines der Meßpunktes M5 bis M8 für den größten bzw. kleinsten Radius a bzw. b der Ortskurve O von Mittelpunkt P wird außerdem im gleichen Programmabschnitt 26 z. B. mit dem Meßpunkt M6 in der Rechenstufe 15 der Drehungswinkel $\alpha$ der Ortskurve O im Vektordiagramm als Parameter nach folgender Gleichung ermittelt:

$$\alpha = \text{arc tg } \frac{Y_p - Y_6}{X_p - X6}$$

wobei anstelle des Meßpunktes M6 auch der Meßpunkt M8 mit den Koordinaten $X_8$, $Y_8$, gewählt werden kann. Bei entsprechender Umformung der Formel können auch die gespeicherten Werte der Meßpunkte M5 oder M7 in Bezug auf die Werte des Mittelpunktes P zur Berechnung des Winkels $\alpha$ verwendet werden. Günstig sind die Meßpunkte auf den kleinen Halbachsen.

Da das Erdfeld He während der Kreisfahrt des Fahrzeuges 19 unverändert bleibt, beschreibt der Vektor $\underline{H}$e des Erdfeldes im Fahrzeug 19 einen Kreis K gemäß Figur 2, dessen Mittelpunkt P mit dem der elliptischen Ortskurve O identisch ist. Im Programmschritt 27 kann daher in der Rechenstufe 14 die Größe des Erdfeldes He und die Größe des induzierten Störfeldes Hi als feste Parameter nach folgenden Gleichungen aus den Radien a und b der elliptischen Ortskurve O ermittelt und in der Speicherstufe 13 abgelegt werden:

$$He = \frac{a + b}{2} \quad ; \quad Hi = \frac{a - b}{2}$$

Eine ähnliche Kalibriermethode bestimmt analog zum beschriebenen Verfahren die fünf Ellipsenparameter bei zweimaliger Kreisfahrt. Während der ersten Kreisfahrt werden die Koordinaten des Ellipsenmittelpunktes bestimmt. Bei der zweiten Kreisfahrt werden die beiden Halbachsen und der Winkel $\alpha$ berechnet. Mit dieser Methode kann viel Speicherplatz gespart werden.

Damit sind alle Parameter, die zur Bestimmung der Fahrtrichtung während der anschließenden Fahrt benötigt werden von der Auswerteschaltung 11 ermittelt und gespeichert. Der für die Fahrtrichtung ermittelte Winkel bedarf jedoch noch einer Korrektur, da er die sogenannte Mißweisung, also die Abweichung der Erdfeldrichtung vom tatsächlichen Nordpol nicht berücksichtigt. Außerdem sind die Einbautoleranzen bei der Anbringung des Sensors 10 im Fahrzeug 19 nicht berücksichtigt, so daß die X-Achse der in Fahrtrichtung liegenden Sonde des Magnetometers nicht mit der Fahrzeuglängsachse $x_0$ zusammenfällt. In Figur 3 ist diese Einbautoleranz und die Mißweisung durch ein Vektordiagramm mit den gestrichelt dargestellten Achsen x' und y' dargestellt, welches mit den Fahrzeugachsen $x_0$ und $y_0$ eine Drehung um den Winkel $\Delta\varphi$ bildet. Um diese Meßfehler auszugleichen, muß im Programmabschnitt 28 nunmehr die Eichung des elektronischen Kompasses vorgenommen werden.

Zu diesem Zweck wird das Fahrzeug auf eine vorgegebene Himmelsrichtung, im Beispielsfall nach Osten ausgerichtet oder auf einer Straße bewegt, wobei der Winkel der Luftlinienverbindung zwischen Ausgangs- und Zielpunkt bekannt ist oder aus der Landkarte abgemessen wird. Daraus ergibt sich zur tatsächlichen Nordrichtung ein Winkel $\varphi_0$, der im Beispielfall 90° beträgt. Diese fest vorgegebene Winkelgröße wird nun im Programmabschnitt 29 in die Korrekturstufe 16 der Auswerteschaltung 11 nach Figur 1 durch Betätigen des Tastschalters 17 als Festwert eingegeben. Zugleich wird in dieser Fahrzeugposition durch die Rechenstufe 14 und 15 aufgrund der laufenden Messungen aus der Ortskurve O die Richtung des Erdfeldes He ermittelt und der dabei auftretende Winkel $\varphi_1$ in die Korrekturstufe 16 mit eingegeben. Dabei gibt $\varphi_1$- wie Figur 3 zeigt - den Winkel an, den das Erdfeld He mit der Achse x' des Vektordiagramms x', y' bildet. Im nachfolgenden Programmabschnitt 30 wird nun in der Korrekturstufe 16 ein Korrekturwinkel $\Delta\varphi$ gebildet, in dem nach der Gleichung:

$$\Delta\varphi = \varphi_1 - \varphi_0$$

4

der durch die Fahrzeuglängsachse $x_0$ eingestellte Winkel $\varphi_0$ zur Nordrichtung von dem im Kompass ermittelten Wert $\varphi_1$ des Erdfeldes He abgezogen wird. Der so gebildete Korrekturwinkel $\Delta\varphi$ wird in der Korrekturstufe 16 abgelegt und zugleich auf die Rechenstufen 14 und 15 gegeben. Durch ihn werden Mißweisung und Einbautoleranzen kompensiert, so daß der in der Rechenstufe 15 nunmehr ermittelte Winkel $\varphi$ den tatsächlichen Winkel der Fahrzeuglängsachse $x_0$ zur Nordrichtung darstellt.

Im nachfolgenden Programmabschnitt 31 wird nun mit Antritt einer Fahrt jeweils ein neuer Meßwert Mx auf der Ortskurve O in Figur 2 durch die vom Magnetometer des Sensors 10 gemessene X- und Y-Werte in die Auswerteschaltung 11 eingegeben. Aufgrund der ermittelten Parameter Hs, He, Hi, a, b und $\alpha$ muß nun im Programmabschnitt 32 erneut der Winkel $\varphi$ ermittelt werden.

Wie Figur 2 zeigt, besteht zwischen dem Erdfeldvektor $\underline{He}$ und dem resultierenden Magnetfeldsektor Hr ein Differenzwinkel $\delta$. Da nun mit der laufenden Messung des Magnetfeldes $\underline{H}$ am Sensor 10 durch die Vektorgleichung $\underline{H} = \underline{Hs} + \underline{Hr}$ zunächst nur die Größe und Richtung des resultierenden Feldes Hr zu ermitteln ist, muß in der Rechenstufe 15 im Programmabschnitt 32 über den Kosinussatz zunächst noch der Differenzwinkel $\delta$ nach folgender Gleichung ermittelt werden:

$$\delta = \arccos \frac{Hr^2 + He^2 - Hi}{2\,Hr\,.He};$$

$$\text{bzw.}\ \frac{\delta}{2} = \arctan \sqrt{\frac{(U-Hr)\,(U-He)}{U\,(U-Hi)}}\ ;\ \left(mit\,U = \frac{Hr+He+Hi}{2}\right)$$

$$\left(\text{mit } U = \frac{Hr + He + Hi}{2}\right)$$

Der Winkel $\varphi''$ für das resultierende Magnetfeld Hr im Meßpunkt Mx zur X-Achse gibt sich nach der Gleichung:

$$\varphi'' = \arctan \frac{Yx - Yp,}{Xx - Xp},$$

so daß schließlich der Winkel $\varphi'$ des Erdfeldes He nach der Gleichung $\varphi' = \varphi'' + K\delta$ errechnet wird. Da der Differenzwinkel $\delta$ je nach Lage des resultierenden Magnetfeldes Hr zum Winkel $\varphi''$ abzuziehen oder hinzuzuaddieren ist, ergibt sich für den Wert K:

$$K = \begin{cases} +1 \text{ für } \alpha < \varphi'' < \alpha + 90° \text{ oder } \alpha + 180° < \varphi'' < \alpha + 270° \\ -1 \text{ für } a + 90° < \varphi'' < \alpha + 180° \text{ oder } \alpha + 270° < \varphi'' < \alpha + 360° \end{cases}$$

Der auf diese Weise in der Rechenstufe 15 ermittelte Winkel $\varphi'$ des Erdfeldes zur X-Achse des Vektordiagrammes kann nun in einem letzten Schritt des Programmabschnittes 32 von der Rechenstufe 15 nach der Gleichung:

$$\varphi = \varphi' - \Delta\varphi$$

in den tatsächlichen Winkel der Fahrtrichtung zur Nordrichtung und umgerechnet werden. Im Programmschritt 33 wird dieser Wert bzw. die Fahrtrichtung über die Anzeige 12 dem Fahrer mitgeteilt.

Im Programmschritt 34 wird nun geprüft, ob das Fahrzeug mit dem laufenden Meßpunkt Mx im Bereich der für den Eichvorgang ermittelten Meßpunkte M1 bis M8 der elliptischen Ortskurve O gelangt. Solange dies nicht der Fall ist, werden die Programmschritte 31, 32 und 33 zyklisch durchlaufen und die Fahrtrichtung bzw. der Winkel $\varphi$ zwischen Fahrtrichtung und Nordrichtung wird kontinuierlich angezeigt. Nähert sich jedoch der Meßpunkt Mx einem der Meßpunkte M1 bis M8, so wird dies im Programmschritt 34 von der Rechenstufe 15 erkannt und der gemessene Wert zunächst in der Speicherstufe 13 zwischengespeichert. Im Programmschritt 35 wird geprüft, ob der gemessene Wert zur Nacheichung des elektronischen Kompasses benötigt wird. Dies ist dann der Fall, wenn der gemessene Wert des Magnetfeldes H einen vorgebbaren Betrag von der Ortskurve O abweicht. In diesem Fall springt das Programm wieder zurück auf den Schritt 23 und es ermittelt in den nachfolgenden Schritten mit dem neuen Meßwert die entsprechend korrigierte Ortskurve O. Wird dagegen keine Abweichung des gemessenen Magnetfeldes H von der Ortskurve O festgestellt, so springt das Programm auf den Programmschritt 31 zur Messung der aktuellen Fahrtrichtung zurück. Dies gilt auch für alle weiteren Fahrten mit dem Fahrzeug 19, bei denen eine Eichfahrt nicht mehr erforderlich ist. Nach dem Programmstart springt dann folglich im Programmschritt 21 bei geöffnetem Schalter 18 das Programm sogleich auf den Schritt 31 zur Erfassung des aktuellen Meßwertes für das Magnetfeld H am Sensor 10 mit anschließender Berechnung der Fahrtrichtung im Schritt 32 und der Anzeige im Schritt 33.

Die Erfindung ist nicht auf das dargestellte Ausführungsbeispiel beschränkt. So kann beispielsweise bei entsprechend korrektem Einbau des Sensors eine Ermittlung des Korrekturwinkels $\Delta\varphi$ entfallen, indem die sogenannte Mißweisung als bekannter, im Fahrbereich des Kraftfahrzeuges praktisch unveränderter Wert in die Aus016schaltung eingegeben und dann von dem Programm der Auswerteschaltung berücksichtigt wird. Es ist ebenso im Rahmen der Erfindung möglich, den Programmschritt 34 zur Prüfung der Fahrtrichtungsänderung wegzulassen und mit jedem Programmdurchlauf zu prüfen, ob der vom Magnetometer gemessene Wert des Magnetfeldes H auf der ermittelten Ortskurve O liegt bzw. ob eine Korrektur der Ortskurve erforderlich ist. Durch ein entsprechend erweitertes Programm kann außerdem festgelegt werden, daß eine Korrektur der Ortskurve O erst dann erfolgt, wenn die Abweichung der Meßwerte mehrfach einen bestimmten Betrag überschreitet. Außerdem ist es für die Eichung des elektronischen Kompasses unerheblich, ob die Eichung durch eine oder zwei Kreisfahrten oder durch vollständige Drehungen des Fahrzeuges 19, beispielsweise auf einer Bühne erfolgt. Erfindungswesentlich ist, daß zur Ermittlung der Richtung des Erdfeldes He und zur Ermittlung der Fahrtrichtung in einem Vektordiagramm die Meßpunkte mit den maximalen und minimalen X- und Y-Werten der elliptischen Ortskurve O des am Magnetometer gemessenen Magnetfeldes H erfaßt werden, daß daraus der Vektor des festen Störfeldes Hs mit den Koordinaten $X_p$ und $Y_p$ des Mittelpunktes P als Parameter der elliptischen Ortskurve O ermittelt und gespeichert wird, daß danach die Meßpunkte des Magnetfeldes H mit den maximalen und minimalen Radien a, b der elliptischen Ortskurve O erfaßt und daraus die Halbachsen als weitere Parameter der Ortskurve O ermittelt und gespeichert werden und daß aus den X- und Y-Werten des Mittelpunktes P sowie den X-und Y-Werten eines Meßpunktes mit dem minimalen oder maximalen Radius a bzw. b der Ortskurve O der Drehungswinkel $\alpha$ als Parameter der Ortskurve O ermittelt und gespeichert wird. Da sich aus diesen Parametern die Größe und die Lage der elliptischen Ortskurve des gemessenen Magnetfeldes H bestimmen läßt, kann schließlich während der Fahrt aus den jeweils gemessenen X-und Y-Werten des Magnetfeldes H über einen Algorithmus die Fahrtrichtung des Kraftfahrzeuges ermittelt und angezeigt werden.

## Patentansprüche

1. Verfahren zur Ermittlung der Fahrtrichtung eines Fahrzeuges mit einen elektronischen Kompass, der ein im Fahrzeug fest angeordnetes Magnetometer (10) mit mindestens zwei mit ihren Längsachsen um 90° gegeneinander verdrehten Sonden hat und mit einer Auswerteschaltung (11), welcher die vom gemessenen Magnetfeld abhängigen elektrischen Signale der Sonde zur Ermittlung von Richtung und Größe der am Magnetometer wirksamen Magnetfelder sowie zur Berechnung der Fahrtrichtung zugeführt werden, dadurch gekennzeichnet,

   a) daß zur Ermittlung der Richtung des Erdfeldes (He) und seines Winkels ($\varphi$') zur X-Achse des Magnetometers (10) durch eine volle Drehung des Fahrzeuges (19) zunächst in einem Vektordiagramm (X, Y) vier Meßpunkte (M1... M4) mit den maximalen und minimalen Werten (x, y) einer elliptischen Ortskurve (O) des am Magnetometer (10) gemessenen Magnetfeldes (H) von der Auswerteschaltung (11) erfaßt und daraus der Vektor eines festen Störfeldes (Hs) mit den Koordinaten (Xp, Yp) des Mittelpunktes (P) als Parameter der elliptischen Ortskurve (O) ermittelt und gespeichert wird,
   b) daß danach Meßpunkte (M5... M8) des Magnetfeldes (H) mit den maximalen und minimalen Radien (a, b) der elliptischen Ortskurve (O) zu ihrem Mittelpunkt (P) von der Auswerteschaltung (11) erfaßt und daraus die Halbachsen als weitere Parameter der Ortskurve (O) ermittelt und gespeichert werden,
   c) daß aus den Werten (x, y) des Mittelpunktes (P) und den Werten (x, y) mindestens eines Meßpunktes (M5... M8) mit minimalem oder maximalem Radius (a, b), der Ortskurve (A) der Drehungswinkel ($\alpha$) als Parameter der Ortskurve (O) ermittelt und gespeichert wird und
   d) daß schließlich während der Fahrt aus den gespeicherten Parametern der Ortskurve (O) und den Werten (x, y) des zyklisch gemessenen Magnetfeldes (H) über einen Algorithmus die Fahrtrichtung des Fahrzeugs ermittelt wird.

2. Verfahren nach Anspruch 1, dadurch gekennzeichnet, daß während der Fahrt weitere Meßpunkte (Mx) im Vektordiagramm (x, y) von der Auswerteschaltung (11) erfaßt, abgespeichert und zur Überprüfung und Korrektur der ermittelten Parameter der Ortskurve (O) verarbeitet werden.

3. Verfahren nach Anspruch 1, dadurch gekennzeichnet, daß während der vollen Drehung bzw. einer Kreisfahrt des Fahrzeuges (19) neben den vier Meßpunkten (M1... M4) eine Vielzahl weiterer Meßpunkte (M5... M8) von der Auswerteschaltung (11) zur Ermittlung weiterer Parameter der Ortskurve (O) des gemessenen Magnetfeldes (H) erfaßt und gespeichert werden.

4. Verfahren nach Anspruch 3, dadurch gekennzeichnet, daß während der Fahrt des Fahrzeuges (19) die gemessenen Werte (x, y) des Magnetfeldes (H) mit den gespeicherten Werten der Ortskurve (O) verglichen und bei Abweichungen von der Ortskurve (O) zur Nacheichung erfaßt und gespeichert werden.

6

**Revendications**

1. Procédé pour déterminer la direction de déplacement d'un véhicule avec un compas électronique comportant un magnétomètre avec au moins deux sondes dont les axes longitudinaux sont décalés en rotation de 90° l'un par rapport à l'autre, et avec un circuit d'exploitation qui exploite les signaux électriques des sondes, dépendants du champ magnétique mesuré, pour déterminer la direction et la grandeur des champs magnétiques agissant sur le magnétomètre, ainsi que pour calculer la direction de déplacement, procédé caractérisé en ce que:

a) pour déterminer la direction du champ terrestre (He) et son angle (φ') par rapport à l'axe X du magnétomètre (10) par rotation du véhicule (19), des points de mesure (M1... M4), avec les valeurs maximales et minimales (x, y) d'un lieu géométrique elliptique (O) du champ magnétique (H) mesuré sur le magnétomètre (10), sont tout d'abord enregistrés dans un diagramme vectoriel (X, Y), et à partir de là, le vecteur d'un champ parasite fixe (Hs), avec les coordonnées (Xp, Yp) du point médian (P) est déterminé et mémorisé par le circuit d'exploitation (11) en tant que paramètre du lieu géométrique elliptique (O),

b) ensuite, des points de mesure (M5... M8) du champ magnétique (H), avec le rayon maximal et le rayon minimal (a, b) du lieu géométrique elliptique (O) par rapport au point médian (P) de celui-ci, sont enregistrés, et à partir de là les demi-axes sont déterminés et mémorisés en tant qu'autres paramètres du lieu géométrique (O).

c) à partir des valeurs (x, y) du point médian (P) et des valeurs (x, y) d'au moins un point de mesure (M5... M8) avec le rayon minimal ou le rayon maximal (a, b) du lieu géométrique (O), l'angle de rotation (α) est déterminé et mémorisé en tant que paramètre du lieu géométrique (O),

d) enfin, pendant le déplacement, la direction de déplacement du véhicule est déterminée par l'intermédiaire d'un algorithme, à partir des paramètres mémorisés du lieu géométrique (O) et des valeurs (x, y) du champ magnétique (H) mesuré cycliquement.

2. Procédé selon la revendication 1, caractérisé en ce que, pendant le déplacement, d'autres points de mesure (Mx) sont enregistrés par le circuit d'exploitation (11) dans le diagramme vectoriel (X, Y) et sont mémorisés et traités pour la vérification et la correction du paramètre déterminé pour le lieu géométrique (O).

3. Procédé selon la revendication 1, caractérisé en ce que, pendant la rotation complète ou bien un déplacement circulaire du véhicule (19), à côté des quatre points de mesure (M1.... M4), une pluralité d'autres points de mesure (M5... M8) est enregistrée et mémorisée par le circuit d'exploitation (11) pour déterminer d'autres paramètres du lieu géométrique (O) du champ magnétique (H) mesuré.

4. Procédé selon la revendication 3, caractérisé en ce que, pendant le déplacement du véhicule (19), les valeurs mesurées (x, y) du champ magnétique (H) sont comparées avec les valeurs mémorisées du lieu géométrique (O), et en cas d'écarts à partir de ce lieu géométrique (O), elles sont enregistrées et mémorisées en vue d'une vérification ultérieure d'étalonnage.

**Claims**

1. Method of determining the direction of travel of a vehicle with an electronic compass, which has a magnetometer (10), which is arranged fixed in the vehicle and has at least two probes of which the longitudinal axes are rotated by 90° with respect to one another, and with an evaluation circuit (11), to which the electrical signals of the probe, which are dependent upon the measured magnetic field, are fed in order to determine the direction and magnitude of the magnetic fields effective at the magnetometer, and to calculate the direction of travel, characterized

a) in that, in order to determine the direct ion of the terrestrial field (He) and of its angle (φ') to the X-axis of the magnetometer (10), firstly by a complete turn of the vehicle (19) four measured points (M1... M4) are acquired by the evaluation circuit (11) in a vector diagram (X, Y) with the maximum and minimum values (x, y) of an elliptical locus diagram (O) of the magnetic field (H) measured at the magnetometer (10), and therefrom the vector of a fixed interference field (Hs) is determined with the coordinates $(X_p, Y_p)$ of the mid-point (P) as parameter of the elliptical locus diagram (O) and stored,

b) in that thereafter the measured points (M5... M8) of the magnetic field (H) are acquired, by the evaluation circuit (11), with the maximum and minimum radii (a, b) of the elliptical locus diagram (O) to its mid-point (P) and therefrom the semiaxes are determined as further parameters of the locus diagram (O) and stored,

c) in that the angle of rotation (α) is determined as parameter of the locus diagram (O) from the values (x, y) of the mid-point (P) and from the values (x, y) of at least one measured point (M5... M8) with the minimum or maximum radius (a, b) of the locus diagram (O) and stored, and

d) in that, finally, during the journey the direction of travel of the vehicle is determined by an algorhythm from the stored parameters of the locus diagram (O) and from the values (x, y) of the cyclically measured magnetic field (H).

2. Method according to Claim 1, characterized in that during the journey further measured points (Mx) in the vector diagram (x, y) are acquired by the evaluation circuit (11), stored and processed to check and correct the determined parameters of the locus diagram (O).

3. Method according to Claim 1, characterized in that in addition to the four measured points (M1... M4), during the complete turn or a circular journey of the vehicle (19) a plurality of further measured points (M5... M8) is acquired by the evaluation circuit (11) in order to determine further parameters of the locus diagram (O) of the measured magnetic field (H), and is stored.

4. Method according to Claim 3, characterized in that during the journey of the vehicle (19) the measured values (x, y) of the magnetic field (H) are compared with the stored values of the locus diagram (O), and given deviations from the locus diagram (O) are acquired and stored for the purpose of recalibration.

FIG. 1

FIG. 2

1